(19)

Europäisches Patentamt

European Patent Office

Office européen des brevets

(11) **EP 4 105 643 A1**

(12) **EUROPEAN PATENT APPLICATION**

(43) Date of publication:
**21.12.2022 Bulletin 2022/51**

(21) Application number: **21305834.0**

(22) Date of filing: **17.06.2021**

(51) International Patent Classification (IPC):
***G01N 21/64*** *(2006.01)*

(52) Cooperative Patent Classification (CPC):
**G01N 21/6458; G02B 21/16;** G01N 21/6408;
G01N 2021/6419

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Paris Sciences et Lettres**
  **75006 Paris (FR)**
• **Centre National de la Recherche Scientifique**
  **75016 Paris (FR)**
• **SORBONNE UNIVERSITE**
  **75006 Paris (FR)**
• **Université Paris-Saclay**
  **91190 Saint-Aubin (FR)**
• **INSTITUT NATIONAL DE RECHERCHE POUR L'AGRICULTURE, L'ALIMENTATION ET L'ENVIRONNEMENT**
  **75007 Paris (FR)**
• **Commissariat à l'Energie Atomique et aux Energies Alternatives**
  **75015 Paris (FR)**

• **Agroparistech**
  **75005 Paris (FR)**

(72) Inventors:
• **Espagne, Agathe**
  **92120 Montrouge (FR)**
• **Brettel, Klaus**
  **78470 St-Rémy-lès-Chevreuse (FR)**
• **Jullien, Ludovic**
  **94110 Arcueil (FR)**
• **Le Saux, Thomas**
  **92800 Puteaux (FR)**
• **Ludvikova, Lucie**
  **75014 Paris (FR)**
• **Müller, Pavel**
  **92100 Boulogne-Billancourt (FR)**
• **Robert, Lydia**
  **75013 Paris (FR)**

(74) Representative: **Jacobacci Coralis Harle**
  **32, rue de l'Arcade**
  **75008 Paris (FR)**

(54) **METHOD FOR ENHANCING THE PHOTORESISTANCE OF A FLUORESCENT SPECIES AND FLUORESCENCE MICROSCOPY SYSTEM SUITABLE FOR IMPLEMENTING SAID METHOD**

(57) It is provided a method for enhancing the photoresistance of a fluorescent species when used in fluorescence microscopy of a sample (2) containing several molecules of the fluorescent species according to a fluorescence microscopy technique, the method comprising illuminating at least partially the sample with an exciting light beam (4) and illuminating at least partially the same region of the sample with an enhancing light beam (6).

It is also provided a fluorescence microscopy system (1) suitable to implement the above method.

Fig.2

EP 4 105 643 A1

**Description**

TECHNICAL FIELD OF THE INVENTION

The invention relates to the technical field of fluorescence microscopy.

More precisely the invention relates to a method for enhancing the photoresistance of a fluorescent species, and fluorescence microscopy system suitable for implementing said method.

It is concerned with the reduction of the photobleaching of fluorescent labels during the observation of samples by means of fluorescence microscopy.

BACKGROUND INFORMATION AND PRIOR ART

Fluorescence microscopy is a method for observing a sample, in which the sample emits fluorescence upon being illuminated with an external light source of appropriate wavelength. To obtain the fluorescence, the sample may be coupled to (or labelled, or tagged with) fluorescent species (or fluorophores, or fluorochromes). Fluorophores may for instance be organic molecules, proteins, or nanoparticles able to emit light as a result of an excitation by an external illumination.

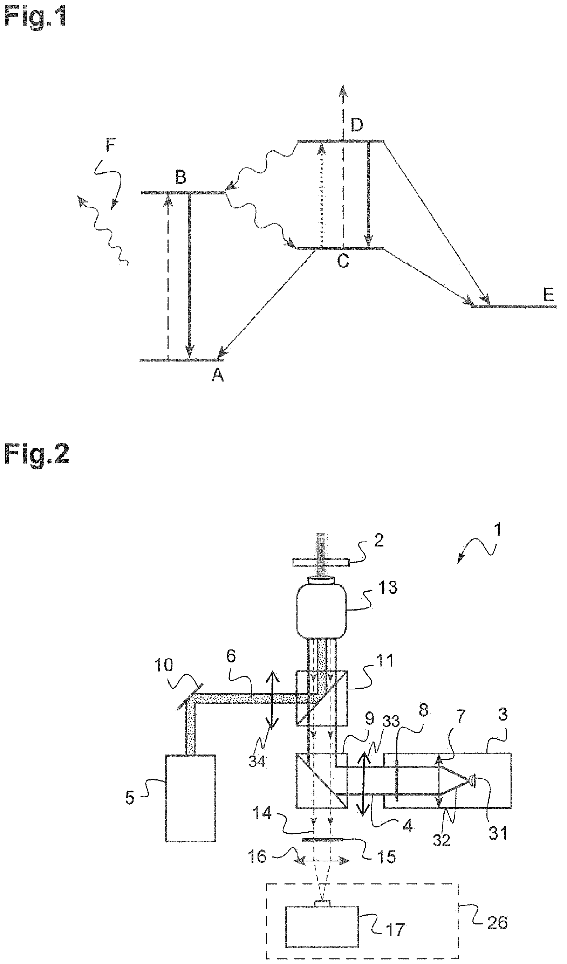

As shown on figure 1, fluorescence occurs when a fluorophore, initially in a ground state A, is excited into a singlet excited state B by way of an absorption of photons from an exciting illumination having a wavelength in an absorption band of the fluorophore. The fluorophore then relaxes back to the initial ground state A by an emission F of fluorescence light and by heat dissipation, or transits into a long-lived triplet excited state C via a phenomenon called intersystem crossing (ISC). The long-lived triplet excited state can either

-    relax back into the ground state A,

-    transit into a photobleached state E (the fluorophore is thus degraded into a photoproduct), or

-    be re-excited by absorption of photons into a higher lying triplet excited state D, from which the fluorophore can either be restored via reverse intersystem crossing (RISC) to the singlet excited state B or degrade to photoproduct(s) (photobleached state E).

A photobleached state is an irreversible non-fluorescent state of the fluorophore, from which it is not possible to return to the initial fluorescent state neither spontaneously nor by the effect of a light excitation.,

For instance, fluorescent species such as organic fluorophores and fluorescent proteins degrade into photoproducts after typically $10^5$ excitationemission cycles which for a molar absorption coefficient of the fluorophore of 100 000 mol$^{-1}$.L.cm$^{-1}$ and an excitation intensity of 1 W.cm$^{-2}$ at 500 nm leads to the extinction of the fluorophore in about 100 seconds.

Photobleaching results from the gradual extinction of all fluorophores in the sample, by transition from their fluorescent state to photobleached states. The fluorescence signal decay as a function of time may be characterized by measuring the fluorescence half-life defined as the characteristic time at which the fluorescence signal is equal to half of the initial fluorescence signal.

Photobleaching concerns all fluorophores and fluorescence imaging techniques and leads to various problems. It limits the duration and/or the time resolution of the experiments, which hinders the proper monitoring of biological dynamics. It limits the number of photons emitted by the fluorophores, which degrades the image quality. It complicates the quantitative analysis of fluorescence variations. In addition, photobleached fluorophore states may be damaging to the sample under study and contribute to phototoxicity.

Several solutions exist to reduce photobleaching. For instance, it is possible to remove oxygen from the sample to avoid the formation of singlet oxygen by interaction of oxygen with the triplet state of the fluorophore. This is usually done by means of enzymes added to the cell culture medium, which reduce oxygen to water, as described in the scientific publications "Mechanochemical coupling in actomyosin energy transduction studied by in vitro movement assay", Harada et al., J. Mol. Biol. 1990, 216, 49 and "Oxyrase cell membrane preparations simplify cultivation of anaerobic bacteria", Thurston et al., Lab. Med. 2000, 31, 509".

Another existing solution consists in quenching the triplet state of the fluorescent species by means of electron transfer reactions (reduction followed by oxidation, or vice versa). This strategy uses mixtures of reductants and oxidants, such as Trolox or the ROXS system (1 mM ascorbic acid + 1 mM methylviologen), a description of which may be found in the scientific publications "Nonblinking and long-lasting single-molecule fluorescence imaging", Rasnik et al., Nat. Methods 2006, 3, 891" and "A reducing and oxidizing system minimizes photobleaching and blinking of fluorescent dyes", Vogelsang et al., Angew. Chem. Int. Ed. 2008, 47, 5465". It requires cell fixation and oxygen removal.

A third strategy can be used to specifically reduce the photobleaching of green fluorescent proteins. Based on the observation that their photobleaching is accelerated in presence of biologically relevant electron acceptors such as flavins, cell culture media were developed which lack riboflavin and pyridoxal. Such culture media are described in the scientific publications "Cell culture medium affects GFP photostability: a solution", Bogdanov et al., Nat. Methods 2009, 6, 859", "Anti-fading media for live cell GFP imaging", Bogdanov et al., Plos One 2012, 7, e53004" and "Influence of cell growth conditions and medium composition on EGFP photostability in live cells", Mamontova et al., BioTechniques 2015, 58, 258"

Hence, existing anti-photobleaching technologies are based on chemically modifying the sample environment. They require time-consuming preparations before imaging and they have side effects on cell physiology which preclude their use for long-term experiments on live cells, as well as the long-term culture of cells in the media used for imaging. Each single product is compatible with only a limited number of fluorophores and biological samples. Moreover, while changing the environment can be a solution for cell cultures or microorganisms, it is not easily applicable to visualize cells in a tissue or in a multicellular organism, where diffusion of the chemicals limits the efficiency of this approach.

SUMMARY OF THE INVENTION

One object of the invention is to provide a method for microscopic fluorescence imaging, a method for implementing said method, and a corresponding fluorescence microscopy system which enhance the photoresistance of the used fluorescent species, i.e. slow down the photobleaching of the fluorescent species, without chemically altering the sample environment nor requiring any specific sample preparation.

According to an aspect of the invention, it is provided a method for enhancing the photoresistance of a fluorescent species observed by fluorescence microscopy in a sample containing several molecules of the fluorescent species according to a fluorescence microscopy technique, the method comprising:

- illuminating at least a region of the sample with an exciting light beam at an exciting wavelength $\lambda_e$ being in an absorption band of the fluorescent species, with a given exciting intensity $I_e$ according to the fluorescence microscopy technique,
- and illuminating at least partially the same region of the sample with an enhancing light beam with an enhancing intensity $I_+$ and an enhancing wavelength $\lambda_+$ where:
- the enhancing intensity $I_+$ is equal to or higher than the exciting intensity $I_e$;
- the enhancing wavelength $\lambda_+$ is higher than the exciting wavelength $\lambda_e$,
- the enhancing wavelength is chosen so that the ratio $R(\lambda) = [Q_{1+2}(\lambda)-Q_2(\lambda)]/Q_1$ is higher than $1+(R_{max}-1)/2$ where:

  - $R_{max}$ is the maximum value of $R(\lambda)$,
  - $Q_1$ is the quantity of fluorescence light emitted by the fluorescent species during an illumination period $P_i$ when illuminated by the sole exciting illumination at the exciting illumination wavelength $\lambda_e$ with the exciting intensity $I_e$;
  - $Q_2(\lambda)$ is the quantity of fluorescence light emitted by the fluorescent species during the illumination period $P_i$ when illuminated by the sole enhancing illumination with a wavelength $\lambda$, at the enhancing intensity $I_+$;
  - $Q_{1+2}(\lambda)$ is the quantity of fluorescence light emitted by the fluorescent species during the illumination period $P_i$ when illuminated by both the enhancing illumination with wavelength $\lambda$ and the enhancing intensity $I_+$ and the exciting illumination with the exciting wavelength $\lambda_e$ and the exciting intensity $I_e$.

In the context of the invention, the term "absorption band" should be understood as an about 50 nm wavelength interval centered on a peak absorption value, the peak absorption value being a wavelength value for which the absorption reaches a maximum for the considered fluorescent species. A fluorescent species may have more than one absorption peak, and therefore more than one absorption band.

In the context of the invention, the intensity should be understood as the irradiance, or power density, that is to say the power received by a surface per unit area.

In the context of the invention, $R_{max}$ is the maximum value of the ratio $R(\lambda)$ for an optimum enhancing wavelength value.

Thanks to the enhancing illumination, the transient state is depleted and the transition of the fluorescent species into the photobleached state is delayed. Consequently, the photostability, or photoresistance of the fluorescent species is increased and the photobleaching is slowed down. Reducing the photobleaching rate allows the study of samples for longer periods of time and with a better time resolution, and enhances the quality of the recorded images.

According to an embodiment of the invention, the enhancing wavelength $\lambda_+$ is an optimum enhancing wavelength chosen so as to maximize the ratio $R(\lambda)$.

According to an embodiment of the invention, the enhancing illumination is conducted at an optimum enhancing intensity which is the smallest value of the enhancing intensity $I_+$ respecting $R'(2I) \leq \alpha R'(I)$ where:

- a is inferior or equal to 2, preferably inferior or equal to 1.5 and more preferably equal to 1.1.
- $R'(I) = (Q'_{1+2}(I)- Q'_2(I))/Q_1$ where:

  - $Q'_2(I)$ is the quantity of fluorescence light emitted by the fluorescent species during the illumination period $P_i$ when illuminated by the sole enhancing illumination with the enhancing wavelength $\lambda_+$ and with an intensity $I$ superior to the exciting intensity $I_e$,
  - $Q'_{1+2}(I)$ is the quantity of fluorescence light emitted by the fluorescent species during the illumination period $P_i$ when illuminated by both the enhancing illumination with the enhancing wavelength $\lambda_+$ and intensity $I$ and the exciting illumination with the exciting wavelength $\lambda_e$ and the exciting intensity $I_e$.

According to an embodiment, the illumination

period $P_i$ is superior to the half-life period $P_{1/2}$ of the fluorescent species when illuminated by the sole exciting illumination, preferably superior to 3 times the half-life period $P_{1/2}$, and more preferably to 10 times the half-life period $P_{1/2}$.

According to an embodiment of the invention, the illumination period $P_i$ is superior to 1 second.

According to an embodiment, the exciting intensity $I_e$ is inferior or equal to 1000 W.cm$^{-2}$ and preferably inferior to 100 W.cm$^{-2}$.

According to an embodiment, the enhancing intensity $I_+$ respects the relation: $3I_e \leq I_+ \leq 100\, I_e$.

According to an embodiment, the enhancing wavelength $\lambda_+$ is chosen in the near infrared, preferably the enhancing wavelength $\lambda_+$ is between 700 nm and 1000 nm.

An enhancing wavelength in the near infrared, and preferably between 700 and 1000 nm, advantageously leads to a higher value of the ratio $R(\lambda)$ and a slower photobleaching of fluorescent proteins. In addition, near infrared illumination is less phototoxic than ultraviolet-visible illumination and has a higher penetration depth in biological samples than ultraviolet-visible light.

According to an embodiment, the exciting and enhancing illuminations are continuous illuminations.

According to an embodiment, the exciting and enhancing illuminations are conducted simultaneously.

According to an embodiment, the illuminations are time-modulated illuminations.

According to an embodiment, the fluorescent species is a fluorescent protein, the enhancing illumination wavelength $\lambda_+$ is in the near infrared, the exciting intensity $I_e$ is inferior or equal to 100 W.cm$^{-2}$, the enhancing intensity $I_+$ is respecting the relation $3I_e \leq I_+ \leq 100 I_e$

According to another aspect of the invention, it is provided a method for implementing the method according to the invention on a fluorescence microscopy system implementing the fluorescence microscopy technique, the system comprising an illumination system able to deliver at least two light beams in a same illumination region which each wavelength may be chosen among n different illumination wavelengths $\lambda_k$ and each intensity is lower or equal to a maximum intensity $I_{max}(\lambda_k)$ reachable by the illumination system for the n illumination wavelengths $\lambda_k$, the method comprising:

- illuminating a region of a sample containing several molecules of the fluorescent species with an exciting light beam at an exciting wavelength $\lambda_e$ being both in an absorption band of the fluorescent species and among the n different illumination wavelengths $\lambda_k$, with a given exciting intensity $I_e$ according to the fluorescence microscopy technique and measuring the quantity $Q_1$ of fluorescence light emitted by the fluorescent species during an illumination period $P_i$,

- determining the wavelength for an enhancing illumination as the enhancing wavelength $\lambda_+$ which:

- is higher than the exciting wavelength $\lambda_e$ and among the n illumination wavelengths $\lambda_k$;

- maximizes the ratio $R = [Q_{1+2}(A) - Q_2(\lambda)]/Q_1$ where:

  - $Q_2(\lambda)$ is the quantity of fluorescence light emitted by the fluorescent species during the illumination period $P_i$ when illuminated by the sole enhancing illumination with a wavelength $\lambda$ among the n illumination wavelengths $\lambda_k$, with a first intensity $I_1$ equal or superior to the exciting intensity $I_e$ and lower than the minimum of the maximum intensities $I_{max}(\lambda_k)$;

  - $Q_{1+2}(\lambda)$ is the quantity of fluorescence light emitted by the fluorescent species during the illumination period $P_i$ when illuminated by both the enhancing illumination with wavelength $\lambda$ and the first intensity $I_1$ and the exciting illumination with the exciting wavelength $\lambda_e$ and the exciting intensity $I_e$;

- setting the system so that when using the fluorescent species the illumination system delivers at least:

  - an exciting beam having the exciting wavelength $\lambda_e$ and the exciting intensity le;

  - an enhancing beam having the enhancing wavelength $\lambda_+$ and the maximum enhancing intensity $I_{max}(\lambda_+)$ reachable for the enhancing wavelength $\lambda_+$.

According to an embodiment, the method further comprises choosing an optimum enhancing intensity as the smallest value of the enhancing intensity $I_+$ respecting $R'(2I) \leq \alpha R'(I)$ where:

- a is inferior or equal to 2, preferably inferior or equal to 1.5 and more preferably equal to 1.1.
- $R'(I) = (Q'_{1+2}(I) - Q'_2(I))/Q_1$ where:

  - $Q'_2(I)$ is the quantity of fluorescence light emitted by the fluorescent species during the illumination period $P_i$ when illuminated by the sole enhancing illumination with the enhancing wavelength $\lambda_+$ and with an intensity I superior to the exciting intensity le and lower to $I_{max}(\lambda_+)$,

  - $Q'_{1+2}(I)$ is the quantity of fluorescence light emitted by the fluorescent species during the illumination period $P_i$ when illuminated by both the enhancing illumination with the enhancing wavelength $\lambda_+$ and intensity I and the exciting illumination with the exciting wavelength $\lambda_e$ and the exciting intensity le;

- setting the system so that the illumination system delivers at least:

- an exciting beam having the exciting wavelength $\lambda_e$ and the exciting intensity Ie;

- an enhancing beam having the enhancing wavelength $\lambda_+$ and the optimum enhancing intensity.

According to an embodiment, the first intensity $I_1$ respects the relation $Ie \leq I_1 \leq 3I_e$ and preferably equals $3I_e$.

According to another aspect of the invention, it is provided a fluorescence microscopy system suitable for implementing the methods according to the invention, the system comprising an illumination system able to deliver in a same region at least:

- an exciting beam having the exciting wavelength $\lambda_e$ and the exciting intensity $I_e$;

- an enhancing beam having the enhancing wavelength $\lambda_+$ and the enhancing intensity $I_+$.

According to an embodiment, the illumination system comprises at least two light sources, one being a tunable light source able to deliver an enhancing illumination with an enhancing wavelength $\lambda_+$ tunable between at least 700 nm and 1000 nm and an enhancing intensity $I_+$ tunable between at least 20 W.cm$^{-2}$ and 10 kW.cm$^{-2}$.

DETAILED DESCRIPTION OF EXAMPLE(S)

The following description with reference to the accompanying drawings will make it clear what the invention consists of and how it can be achieved. The invention is not limited to the embodiments illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:

- Figure 1, previously described, shows the mechanism of fluorescence emission by a fluorescent species excited with an excitation light,

- figure 2 is a schematic illustration of a fluorescence microscopy system suitable for implementing the enhancing method according to the invention,

- figure 3 shows an observation area of the fluorescence microscopy system of figure 2,

- figure 4 shows the influence of the enhancing wavelength on the fluorescence of a fluorescent species,

- figure 5 shows the influence of the enhancing intensity on the fluorescence of the fluorescent species,

- figure 6 shows the evolution of instant fluorescence of the fluorescent species, when exposed to the exciting illumination, and when exposed to the exciting illumination and the enhancing illumination, following an embodiment of the method according to the invention,

- figure 7 shows the evolution of instant fluorescence of a biological sample labelled with the fluorescent species, when exposed to the exciting illumination, and when exposed to the exciting illumination and the enhancing illumination, following an embodiment of the method according to the invention,

- figure 8 shows micrographs illustrating the evolution of instant fluorescence of the embodiment of figure 7,

- figure 9 shows the evolution of instant fluorescence of another biological sample labelled with the fluorescent species, when exposed to the exciting illumination and when exposed to the exciting illumination and the enhancing illumination, following an embodiment of the method according to the invention,

- figure 10 shows the evolution of instant fluorescence of another biological sample labelled with the fluorescent species, when exposed to the exciting illumination and when exposed to the exciting illumination and the enhancing illumination, following another embodiment of the method according to the invention,

As explained before, the invention aims at slowing down the photobleaching of a fluorescent species when used in fluorescence microscopy, by illuminating the observed sample with both an exciting beam and an enhancing beam.

In order to do so, it may be used a fluorescence microscopy system 1 for microscopic imaging of a sample 2 as shown on figure 2. This system 1 comprises a first light source 3 configured to perform an exciting illumination by emitting an exciting beam 4 having an exciting wavelength $\lambda_e$ and a second light source 5 configured to perform an enhancing illumination by emitting an enhancing beam 6 having an enhancing wavelength $\lambda_+$.

In this embodiment, the system 1 is a wide-field fluorescence microscope comprising the first light source 3 able to deliver the exciting beam 4 having the exciting wavelength selected among n wavelengths $\lambda_k$ comprised for example between 380 nm and 650 nm. For example, the first light source is able to deliver an exciting beam at n=10 different wavelengths being: 390 nm or 438 nm or 475 nm or 480 nm or 513 nm or 549 nm or 560 nm or 570 nm or 575 nm or 632 nm. For each wavelength the first light source is able to deliver a light beam having an exciting intensity le lower than or equal to a maximum intensity $I_{max}(\lambda_k)$ which is different for each of the n wavelengths $\lambda_k$.

For instance here, the first light source 3 comprises ten light-emitting diodes (LED) 31 one only being shown on the figure. Each LED is configured to deliver a beam 32 collimated by a lens 7 and filtered by an excitation filter 8 in order to form the exciting beam 4. The exciting beam 4 is focused by a lens 33 and directed toward the sample 2 thanks to a first dichroic mirror 9 configured to reflect the exciting beam 4.

In the present example, the second light source 5 is a laser source, here a tunable laser source, able to deliver the enhancing beam having the enhancing wavelength continuously tunable between 700 nm and 1000 nm and an enhancing intensity $I_+$ comprised between 20 W.cm$^{-2}$ and 10000 W.cm$^{-2}$.

The enhancing beam 6 is directed toward the sample 2 after a first reflection on a conventional mirror 10, focusing by lens 34 and a second reflection on a second dichroic mirror 11 configured to reflect the enhancing beam 6 and to transmit the exciting beam 4. In this example, the exciting beam 4 passes through the second dichroic mirror 11 after reflection on the first dichroic mirror 9.

The purpose of lenses 33 and 34 is to focus the exciting beam 4 and the enhancing beam 6 in the rear focal plane of the objective 13 so as to obtain parallel beams at the exit of the objective for wide-field illumination of the sample 2. The objective also collects the fluorescence signal emitted by the sample 2 and collimates it into a fluorescence beam 14. An emission filter 15 is configured to filter the fluorescence beam and a second lens 16 is configured to focus the filtered fluorescence beam on a CCD camera 17.

The camera is part of a measurement module 26 configured to measure the quantity Q of fluorescence light emitted by the fluorescent species, and comprising a processing module configured to normalize the measured signal and to perform operation on the measured signal or on the normalized measured signal, as explained below.

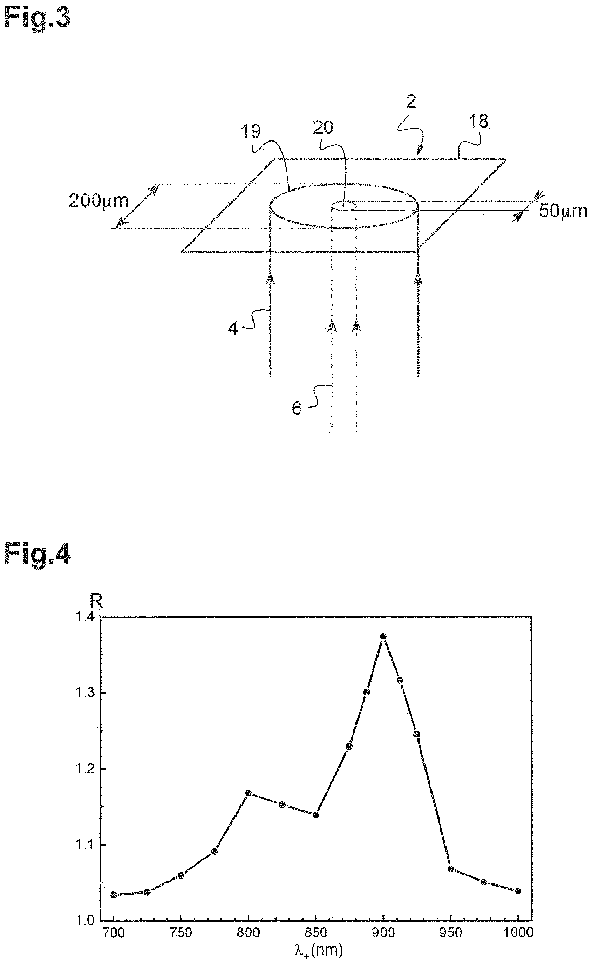

The system further comprises an observation area configured to receive the sample 2 (figure 3). For instance, the sample 2 is arranged on a glass coverslip 18 held on the observation area and placed in the path of the exciting beam 4 and in the path of the enhancing beam 6 so that at least a portion of the sample is illuminated by both the exciting beam 4 and the enhancing beam 6. The system 1 is therefore configured to illuminate the sample 2, for instance continuously, with both the first light 4 and the second light 6.

The inventors had the merit to demonstrate that it is possible to enhance the photoresistance of the fluorescent species by illuminating the sample 2 with an excitation beam 4 and an enhancing beam 6. This double illumination with the exciting and the enhancing beams allows longer observation periods than the ones achieved with the sole exciting illumination at a same intensity in both cases.

Thereafter will be disclosed a method for determining the suitable wavelengths and the suitable intensities of the light beams 4, 6, in which the above-described system 1 for fluorescence microscopy is used for observing the sample 2 being labelled with a chosen fluorescent species. The sample 2 may be labelled using any labelling method known in the art, and the man skilled in the art knows how to choose the appropriate method according to the considered application and the used fluorescent species.

As shown on figure 3, the system 1 is configured to deliver the exciting beam 4 as a wide field illumination which creates a first illuminated area or region 19. The system 1 is further configured to deliver the enhancing beam creating a second illuminated area 20, smaller than the first illuminated area 19 and comprised in the first illuminated area 19. Preferably, each of the illuminated areas should cover a surface of at least $2 \times 10^{-3}$ mm$^2$. For instance here, the first illuminated area covers a circular surface having a diameter of 200 $\mu$m and the second illuminated area covers a circular surface having a diameter of 50 $\mu$m.

The sample 2 is illuminated with the exciting light beam 4 at an exciting wavelength $\lambda_e$ selected among the n different illumination wavelengths $\lambda_k$ so as to be in an absorption band of the fluorescent species, in order to trigger a fluorescence emission by the fluorescent species. For instance, the exciting wavelength $\lambda_e$ is selected among the n wavelengths $\lambda_k$ to be the closest from the absorption peak of the fluorescent species. Those skilled in the art know how to choose the appropriate value for the exciting wavelength as many databases disclose this information which is also given by the providers of fluorescent species.

The exciting wavelength $\lambda_e$ value is preferably selected within a range of about 50 nm centered around the maximum absorption value.

The exciting intensity $I_e$ is set according to the fluorescence microscopy technique (epifluorescence microscopy, confocal microscopy, etc). Those skilled in the art know how to choose the exciting intensity. For instance, in wide-field microscopy the exciting intensity $I_e$ is typically less than 10 W.cm$^{-2}$, while in laser scanning confocal microscopy the exciting intensity $I_e$ is typically higher than 1 kW.cm$^{-2}$.

As a first example of implementation the fluorophore is the Enhanced Green Fluorescent Protein (EGFP) embedded in a polyacrylamide gel. The absorption peak of the EGFP is known as being 488 nm, therefore the exciting wavelength is selected at 480 nm which is the wavelength nearest to the absorption peak among those available in the system 1. The implementation is conducted using wide field illumination with an exciting intensity of 32 W.cm$^{-2}$.

The exciting wavelength $\lambda_e$ and the exciting intensity $I_e$ being set, the best setting for the enhancing beam 6 has to be determined. The enhancing beam 6 should be configured to be absorbed by the fluorescent species so as to trigger a transition of the fluorescent species from the transient state back into the initial state. It is advantageous to first configure the enhancing wavelength $\lambda_+$ namely the wavelength within the range of available wavelengths which has the enhancing effect demonstrated by the inventors. Once this enhancing wavelength is identified, it may be advantageous to optimise the enhancing intensity $I_+$ in order to limit the light received by the sample and hence the possible side effects of the enhancing illumination. At first for determining the enhancing wavelength, an arbitrary predetermined enhancing intensity value may be selected during the configuration of the enhancing wavelength, and preferably a low enhancing intensity value. Here, the arbitrary enhancing intensity value is set to 20 W.cm$^{-2}$.

Thus, in a first step of the method, the quantity Q of fluorescence light emitted by the fluorescent species, as a function of the enhancing wavelength $\lambda_+$, during the illumination period $P_i$ is measured.

The quantity Q of fluorescence light should be understood here as the integral, as a function of time, of a signal $S(\lambda, t)$ representative of the instant fluorescence emitted by the fluorescent species during the illumination period $P_i$. Therefore, the quantity of fluorescence light Q is:

$$Q(\lambda) = \int_{t_0}^{t_0+Pi} S(\lambda, t)\, dt$$

where to is the instant at which the illumination begins.

The enhancing wavelength $\lambda_+$ value should be selected as enhancing the photoresistance of the fluorescent species, that is to say it should be selected so as to maximize the quantity of fluorescence triggered by the exciting illumination only in presence of the enhancing illumination during the illumination period $P_i$. Therefore, although the method concerns a double illumination with the exciting illumination and the enhancing illumination, the fluorescence that may be triggered directly by the enhancing illumination should not be considered.

Thus, a comparison is performed between

- a measurement of a first quantity $Q_1$ of fluorescence light emitted by the fluorescent species illuminated with the exciting beam only (in the first illumination area 19 and outside the second illumination area 20. It is the fluorescence triggered by the exciting illumination only in absence of the enhancing illumination) during an illumination period $P_i$,

- a measurement of a second quantity of fluorescence light $Q_2$ emitted by the fluorescent species illuminated with the enhancing beam 6 only (fluorescence triggered by the enhancing beam only) during a

same illumination period $P_i$, and

- a measurement of a quantity $Q_{1+2}$ of fluorescence light emitted by the fluorescent species illuminated with both the exciting beam 4 and the enhancing beam 6 (in the second illumination area 20. It is the fluorescence triggered by the exciting illumination and by the enhancing illumination) during the illumination period $P_i$.

This comparison is quantified as the ratio: $R(\lambda_+) = (Q_{1+2}(\lambda_+)-Q_2(\lambda_+))/Q_1$. The ratio R is studied for all the available values of the enhancing wavelength $\lambda_+$.

To this end, several measurements of the instant fluorescence emitted by the fluorescent species as a function of time with both the exciting beam 4 and the enhancing beam 6, or with only one of the beams 4, 6, are performed. Since the photobleached state is irreversible, two distinct measurements may not be performed on the same location of the sample 2.

Figure 4 shows the evolution of the value of the ratio $R(\lambda_+)$ as a function of the enhancing wavelength $\lambda_+$, for a predetermined enhancing intensity $I_+$ value.

For instance, it is retained an optimum enhancing wavelength $\lambda_+$ value for which the fluorescence enhancement is at least half of its maximum value, , i.e. an enhancing wavelength value for which $R(\lambda_+)>1+(R_{max}(\lambda_+)-1)/2$, where $R_{max}(\lambda_+)$ is the maximum value of R for the predetermined enhancing intensity value.

In the context of the invention, the term "fluorescence enhancement" should be understood as the difference between the number of photons emitted in presence of both the exciting and enhancing illumination and the number of photons emitted in presence of the exciting illumination only.

More preferably, it is retained the optimum enhancing wavelength value for which $R(\lambda_+) = R_{max}(\lambda_+)$. Here, as apparent on figure 4, the optimum enhancing wavelength $\lambda_+$ value is equal to 900 nm.

Once the optimum enhancing wavelength is determined and set, it is advantageous to determine an optimum enhancing intensity $I_+$ in relation with said optimum enhancing wavelength $\lambda_+$ value previously determined.

In order to do so, the value of the ratio $R'(I_+) = (Q'_{1+2}(I_+)-Q'_2(I_+))/Q'_1$ is studied for all the available values of the enhancing intensity $I_+$ (which depend on the configuration of the system). Preferably, the enhancing intensity is limited to values higher than the exciting intensity $I_e$. For instance, the enhancing intensity is limited to values respecting $3I_e \leq I_+ \leq 100I_e$.

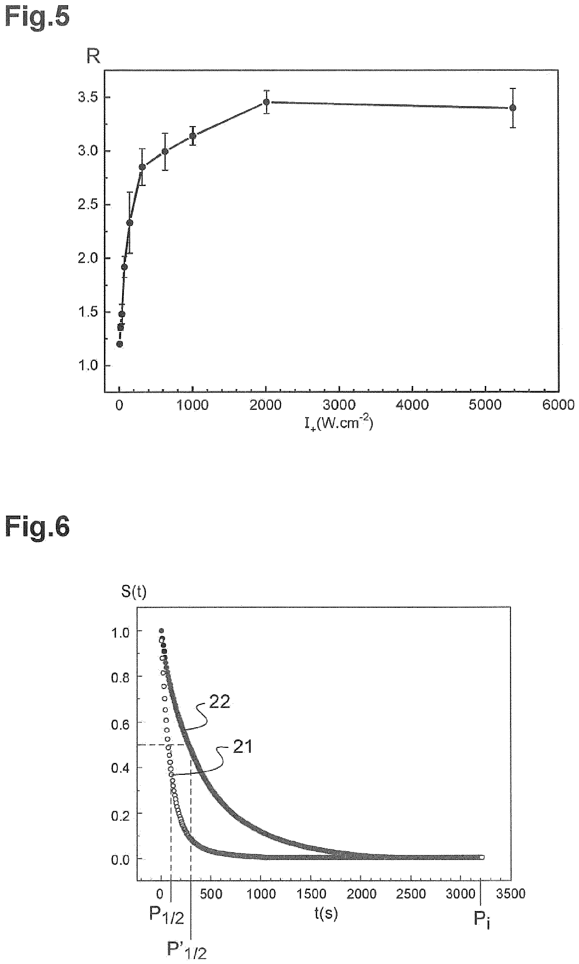

Figure 5 shows the evolution of the value of the ratio $R'(I+)$ as a function of the values of the enhancing intensity $I_+$.

It may be observed that the value of the ratio $R'(I+)$ increases with the enhancing intensity $I_+$. In order to limit sample illumination and any side effect that might arise from it, choosing the maximum available value for the enhancing intensity $I_+$ may however not always be the best choice.

Since the value of the ratio R'(I+) forms a plateau above a certain value of the enhancing intensity, further increasing the enhancing intensity is not advantageous. It is preferable to choose a minimum enhancing intensity value leading to a ratio $R'(I_+)$ belonging to the stage.

To this end, the optimum enhancing intensity $I_+$ is chosen so as to respect $R'(2I_+) \leq aR'(I+)$, where

- a is equal to 1.1,

- $R'(I) = (Q'_{1+2}(I) - Q'_2(I))/Q_1$ where:

- $Q'_2(I)$ is the quantity of fluorescence light emitted by the fluorescent species during the illumination period $P_i$ when illuminated by the sole enhancing illumination with the enhancing wavelength $\lambda_+$ and with an intensity I superior to the exciting intensity $I_e$,

- $Q'_{1+2}(I)$ is the quantity of fluorescence light emitted by the fluorescent species during the illumination period $P_i$ when illuminated by both the enhancing illumination with the enhancing wavelength $\lambda_+$ and the enhancing intensity I and the exciting illumination with the exciting wavelength $\lambda_e$ and the exciting intensity $I_e$. Then, the system 1 is set so that the first light source 3 delivers the exciting beam 4 having the exciting wavelength $\lambda_e$ and the exciting intensity $I_e$, and so that the second light source 5 delivers the enhancing beam 6 having the enhancing wavelength $\lambda_+$, for instance the optimum enhancing wavelength, and the optimum enhancing intensity $I_+$.

Here, the selected enhancing intensity is equal to 2 kW.cm$^{-2}$ and R(I$_+$) = 3.5.

Once the enhancing wavelength $\lambda_+$ value and the enhancing intensity $I_+$ value have been determined for a specific fluorescent species (here, EGFP), they may be used in order to enhance the photoresistance of this fluorescent species, for instance in a microscopy experiment that involves a sample labelled with this fluorescent species or for any type of experimentation, observation or measurement which may be conducted with this specific fluorescent species.

The effect of the enhancing illumination demonstrated by the inventors, is evidenced by the study of the ratio R as disclosed before but this is not the only way to evidence it. For instance, figure 6 shows the evolution of the normalized measured signal in an embodiment of a method for enhancing the photoresistance of a fluorescent species according to the invention, here EGFP embedded in a polyacrylamide gel. In this embodiment, the intensities and wavelength values are those determined previously in the determination method described in connection to figures 4 and 5 (I$_e$ = 32 W.cm$^{-2}$, $\lambda_e$ = 480 nm, I$_+$ = 2000 W.cm$^{-2}$, $\lambda_+$ = 900 nm).

On figure 6, a first curve 21 shows the evolution of the normalized measured signal S(t), (normalized to 1 at t=0, although any normalization may be employed) representative of the instant fluorescence emission triggered by the exciting illumination only, as a function of time, and a second curve 22 shows the evolution of the normalized measured signal S(t) representative of the instant fluorescence emission triggered by both the exciting illumination and the enhancing illumination.

It is apparent on figure 6 that the half-life $P_{1/2}$ of the fluorescence signal S(t) without the enhancing illumination (curve 21) is about 100 s and that the half-life $P'_{1/2}$ of the fluorescence signal S(t) with both the exciting illumination and the enhancing illumination (curve 22) is about 300 s. Therefore, ratio $P'_{1/2}/P_{1/2}$ of the half-lives with and without the enhancing illumination is equal to 3, in the above-mentioned conditions.

Those values of the half-life ratio $P'_{1/2}/P_{1/2}$ are a consequence of an increase in the fluorophore photoresistance and a slowed down photobleaching due to the double illumination of the fluorophore. It is therefore possible to acquire fluorescence data over a longer period.

The above-described embodiment applies to the determination of the enhancing wavelength $\lambda_+$ and the enhancing intensity $I_+$ of the EGFP. However, the determination method may apply to any other fluorophore.

Moreover, in the above-described example, the fluorophore was embedded in a polyacrylamide gel. However, the invention is not limited to fluorescent species embedded in polyacrylamide gel and the advantageous effects provided by the invention may be obtained with fluorescent species coupled to any suitable support, for instance biological samples such as bacteria or eukaryotic cells.

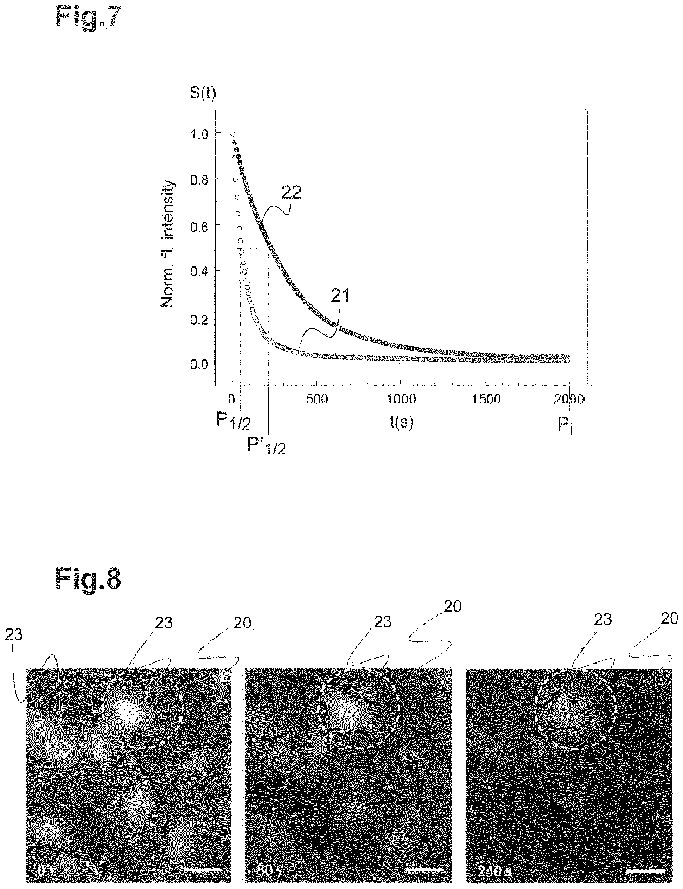

As a demonstration of the relevance of the invention for enhancing the photoresistance of fluorophores in biological samples, Figures 7 to 10 show the results of the implementation of the method in several biological samples.

The figures 7 and 8 show the results of the implementation of the invention with fixed eukaryotic cells, namely HeLa cells labelled with cytoplasmic EGFP.

For this implementation, the exciting wavelength $\lambda_e$ is equal to 480 nm, the exciting intensity $I_e$ is equal to 32 W.cm$^{-2}$, the enhancing wavelength $\lambda_+$ is equal to 900 nm and the enhancing intensity $I_+$ is equal to 2 kW.cm$^{-2}$.

It is apparent on figure 7 that the half-life $P_{1/2}$ of the normalized fluorescence signal S(t) in the presence of the exciting illumination only (curve 21) is about 50 s and that the half-life $P'_{1/2}$ of the normalized fluorescence signal $S_{(t)}$ in the presence of both the exciting illumination and enhancing illumination (curve 22) is about 225 s. Therefore, the half-lives ratio $P'_{1/2}/P_{1/2}$ is equal to 4.5 in the above-mentioned conditions.

Figure 8 shows three micrographs captured during the execution of the embodiment described in connection to figure 7. A first micrograph is taken at an instant t=0, a second micrograph is taken at an instant t= 80 s, and a third micrograph is taken at an instant t = 240 s. The scale bars located on the bottom right of each micrograph are 20 μm long. In order to show the effect of the double illumination, the beams 4 and 6 are delivered according to the configuration of figure 3.

On each micrograph, the bright spots are HeLa cells 23 labelled with cytoplasmic EGFP and emitting fluorescence. All the cells are illuminated with the exciting beam (wide field illumination) and the cells located in the second illuminated area 20 (represented by a dotted circle) are illuminated by both the exciting beam 4 and the enhancing beam 6.

It is clear on figure 8 that the fluorescence of the cell in the second illuminated area decreases slower than the fluorescence of the cells outside the second illuminated area 20. After a period of 240 s, only the cell located in the second illuminated area 20 still emits fluorescence, the other cells being totally photobleached.

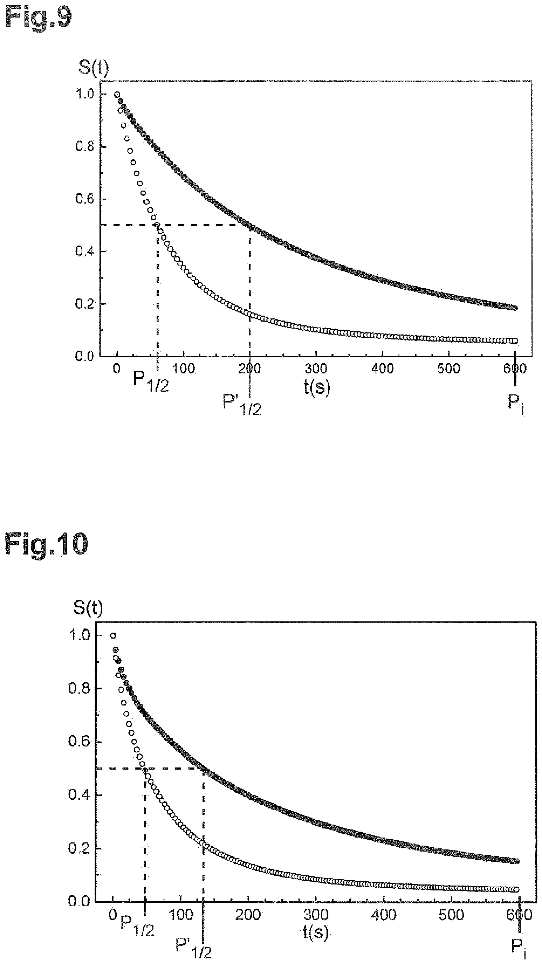

Figure 9 shows the results of the implementation of the invention with another sample of fixed eukaryotic cells, here U2OS cells, labelled with cytoplasmic EGFP.

In this example, the exciting wavelength $\lambda_e$ is equal to 480 nm, the exciting intensity $I_e$ is equal to 32 W.cm$^{-2}$, the enhancing wavelength $\lambda_+$ is equal to 900 nm and the enhancing intensity $I_+$ is equal to 125 W.cm$^{-2}$.

It is apparent on figure 9 that the half-life $P_{1/2}$ of the normalized fluorescence signal S(t) in the presence of the exciting illumination only (curve 21) is about 60 seconds and that the half-life $P'_{1/2}$ of the normalized fluorescence signal S(t) in the presence of both the exciting illumination and the enhancing illumination (curve 22) is 200 seconds.

Figure 10 shows the results of the implementation of the invention with a sample of live bacteria, here Escherichia coli BL21 bacteria placed on a PBS-agarose pad (Phosphate-Buffered Saline agarose pad) and labelled with EGFP.

In this example, the exciting wavelength $\lambda_e$ is equal to 480 nm, the exciting intensity $I_e$ is equal to 32 W.cm$^{-2}$, the enhancing wavelength $\lambda_+$ is equal to 900 nm and the enhancing intensity $I_+$ is equal to 125 W.cm$^{-2}$.

It is apparent on figure 10 that the half-life $P_{1/2}$ of the normalized fluorescence signal S(t) without the enhancing illumination (curve 21) is about 48 s and that the half-life $P'_{1/2}$ of the normalized fluorescence signal S(t) with both the exciting illumination and the enhancing illumination (curve 22) is about 132 s. Therefore, the ratio $P'_{1/2}/P_{1/2}$ of the half-lives with and without the enhancing illumination is equal to 2.8.

The invention is not limited to implementations with the Enhanced Green Fluorescent Protein (EGFP) but may be implemented with other green fluorescent proteins.

For instance, in an embodiment with live Escherichia coli bacteria labelled with green fluorescent proteins in which the exciting wavelength $\lambda_e$ is equal to 480 nm, the exciting intensity $I_e$ is equal to 32 W.cm$^{-2}$, the enhancing wavelength $\lambda_+$ is equal to 900 nm and the enhancing intensity $I_+$ is equal to 125 W.cm$^{-2}$,

- the fluorescent protein being the sfGFP (Superfolder Green Fluorescent Protein), the half-lives ratio is equal to 3.1,

- the fluorescent protein being the acGFP (Aequorea Coerulescens Green Fluorescent Protein), the half-lives ratio is equal to 2.8,

- the fluorescent protein being the emGFP (Emerald Green fluorescent Protein), the half-lives ratio is equal to 1.8,

- the fluorescent protein being mClover, the half-lives ratio is equal to 2.6.

The invention is not limited to green fluorescent proteins but may be implemented with fluorescent proteins of other colours, for instance red or yellow.

For instance, in an embodiment where the exciting wavelength $\lambda_e$ is equal to 480 nm, the exciting intensity $I_e$ is equal to 37 W.cm$^{-2}$, the enhancing intensity $I_+$ is equal to 125 W.cm$^{-2}$, and the enhancing wavelength is equal to 900 nm, the fluorescent protein being Venus in live Escherichia coli bacteria, the half-lives ratio is equal to 1.8.

In another embodiment where the exciting wavelength $\lambda_e$ is equal to 480 nm, the exciting intensity $I_e$ is equal to 37 W.cm$^{-2}$, the enhancing intensity $I_+$ is equal to 125 W.cm$^{-2}$, and the enhancing wavelength is equal to 900 nm, the fluorescent protein being the EYFP (Enhanced Yellow Fluorescent Protein) in live Escherichia coli bacteria, the half-lives ratio is equal to 1.8.

In other embodiments with red fluorescent proteins in live Escherichia coli bacteria where the exciting wavelength $\lambda_e$ is equal to 560 nm, the exciting intensity $I_e$ is equal to 5.8 W.cm$^{-2}$, the enhancing wavelength $\lambda_+$ is equal to 725 nm and the enhancing intensity $I_+$ is equal to 250 W.cm$^{-2}$,

- the fluorescent protein being mCherry, the half-lives ratio is equal to 13.1,

- the fluorescent protein being mRFP1, the half-lives ratio is equal to 8.3.

The embodiments described above in connection to figures 1 to 10 are implemented with fluorophores being fluorescent proteins. However, the invention is not limited to fluorescent proteins and the invention is implementable with other fluorescent species, for instance organic fluorophores such as cyanines, fluoresceins or rhodamines.

The previously described samples are in no way limiting, and the invention may be implemented with other samples. For instance, some embodiments of the invention may use live eukaryotic cells as samples.

Although the previously described embodiments relate to a continuous illumination, the invention may be performed with different kinds of illumination, for instance a scanning illumination, a pulsed illumination, or a time-modulated illumination. More precisely, the exciting and enhancing illuminations may be of different kind and may be carried out simultaneously or not. In embodiments where at least one illumination is a scanning illumination, the corresponding illuminated area should be understood as an area covered by said scanning illumination.

**Claims**

1. Method for enhancing the photoresistance of a fluorescent species when used in fluorescence microscopy of a sample (2) containing several molecules of the fluorescent species according to a fluorescence microscopy technique, the method comprising:

   - illuminating at least a region of the sample with an exciting light beam (4) at an exciting wavelength $\lambda_e$ being in an absorption band of the fluorescent species, with a given exciting intensity $I_e$ according to the fluorescence microscopy technique,
   - and illuminating at least partially the same region of the sample (2) with an enhancing light beam (6) with an enhancing intensity $I_+$ and an enhancing wavelength $\lambda_+$ where:

      - the enhancing intensity $I_+$ is equal to or higher than the exciting intensity ($I_e$);
      - the enhancing wavelength $\lambda_+$ is higher than the exciting wavelength $\lambda_e$,
      - the enhancing wavelength $\lambda_+$ is chosen so that the ratio $R(\lambda) = [Q_{1+2}(\lambda)-Q_2(\lambda)]/Q_1$ is higher than $1+(R_{max}-1)/2$ where:

         - $R_{max}$ is the maximum value of the ratio $R(\lambda)$,
         - $Q_1$ is the quantity of fluorescence light emitted by the fluorescent species during an illumination period ($P_i$) when illuminated by the sole exciting illumination at the exciting wavelength ($\lambda_e$) with the exciting intensity ($I_e$);
         - $Q_2(\lambda)$ is the quantity of fluorescence light emitted by the fluorescent species during the illumination period ($P_i$) when illuminated by the sole enhancing illumination with the enhancing wavelength ($\lambda_+$), at the enhancing intensity ($I_+$) ;
         - $Q_{1+2}(\lambda)$ is the quantity of fluorescence light emitted by the fluorescent species during the illumination period $P_i$ when illuminated by both the enhancing illumination with wavelength $\lambda_+$ and intensity $I_+$ and the exciting illumination with wavelength $\lambda_e$ and intensity $I_e$.

2. Method according to claim 1, wherein the enhancing wavelength is an optimum enhancing wavelength chosen so as to maximize the ratio $R(\lambda)$.

3. Method according to any one of the preceding claims, wherein the enhancing illumination is conducted at an optimum enhancing intensity which is the smallest value of the enhancing intensity $I_+$ respecting $R'(2I) \leq \alpha R'(I)$ where :

   - a is inferior or equal to 2, preferably inferior or equal to 1.5 and more preferably equal to 1.1.
   - $R'(I) = (Q_{1+2}(I)- Q_2(I))/Q_1$ where :

      - $Q'_2(I)$ is the quantity of fluorescence light emitted by the fluorescent species during the illumination period $P_i$ when illuminated by the sole enhancing illumination with the enhancing wavelength $\lambda_+$ and with an intensity I superior to the exciting intensity $I_e$,
      - $Q'_{1+2}(I)$ is the quantity of fluorescence light emitted by the fluorescent species during the illumination period $P_i$ when illuminated by both the enhancing illumination with the enhancing wavelength $\lambda_+$ and intensity I and the exciting illumination with the exciting wavelength $\lambda_e$ and the exciting intensity $I_e$;

4. Method according to any of the preceding claims, wherein the illumination period $P_i$ is superior to the half-life period $P_{1/2}$ of the fluorescent species when illuminated by the sole exciting illumination, preferably superior to 3 times the half-life-period $P_{1/2}$, and more preferably to 10 times the half-life period $P_{1/2}$.

5. Method according to any one of the preceding claims, wherein the illumination period is superior to 1 s.

6. Method according to any one of the preceding claims, wherein the exciting intensity $I_e$ is inferior or equal to 1000 W.cm$^{-2}$ and preferably inferior to 100 W.cm$^{-2}$.

7. Method according to any one of the preceding claims, wherein the enhancing intensity $I_+$ fulfills the relation: $3I_e \leq I_+ \leq 100\ I_e$.

8. Method according to any one of the preceding claims wherein the enhancing wavelength ($\lambda_+$) is chosen in the near infrared, preferably the enhancing wavelength $\lambda_+$ is between 700 nm and 1000 nm.

9. Method according to any one of the preceding claims, wherein the exciting and enhancing illuminations are continuous illuminations.

10. Method according to any one of the preceding claims, wherein the exciting and enhancing illuminations are conducted simultaneously.

11. Method according to any one of the preceding claims, wherein the illuminations are time-modulated illuminations.

12. Method according to any one of the preceding claims wherein:

- the fluorescent species is a fluorescent protein,
- the enhancing illumination wavelength $\lambda_+$ is in the near infrared,
- the exciting intensity $I_e$ is inferior or equal to 100 W.cm$^{-2}$,
- the enhancing intensity $I_+$ fulfills the relation $3I_e \leq I_+ \leq 100I_e$.

13. Method for implementing the method according to any one of the preceding claims on a fluorescence microscopy system (1) implementing the fluorescence microscopy technique, the system comprising an illumination system (3, 5) able to deliver at least two light beams (4, 6) in a same illumination region which each wavelength $\lambda_e$ and $\lambda_+$ may be chosen among n different illumination wavelengths $\lambda_k$ and each intensity $I_e$ and $I_+$ is lower or equal to the maximum intensity $I_{max}(\lambda_k)$ reachable by the illumination system at wavelength $\lambda_k$, the method comprising:

- illuminating a region of a sample (2) containing several molecules of the fluorescent species with an exciting light beam (4) at an exciting wavelength $\lambda_e$ being both in an absorption band of the fluorescent species and among the n different illumination wavelengths, with a given intensity $I_e$ according to the fluorescence microscopy technique and measuring the quantity ($Q_1$) of fluorescence light emitted by the fluorescent species during an illumination period $P_i$,
- determining an enhancing wavelength $\lambda_+$ for an enhancing illumination as the enhancing wavelength $\lambda_+$ which :

- is higher than the exciting wavelength $\lambda_e$ and among the n illumination wavelengths;
- maximizes the ratio $R = [Q_{1+2}(\lambda)-Q_2(\lambda)]/Q_1$ where:

- $Q_2(\lambda)$ is the quantity of fluorescence light emitted by the fluorescent species during the illumination period $P_i$ when illuminated by the sole enhancing illumination with a wavelength $\lambda$ among the n illumination wavelengths, with a first intensity $I_1$ equal or superior to the exciting intensity $I_e$ and lower than the minimum of the maximum intensities $I_{max}(\lambda_k)$ for the different $\lambda_k$;
- $Q_{1+2}(\lambda)$ is the quantity of fluorescence light emitted by the fluorescent species during the illumination period $P_i$ when illuminated by both the enhancing illumination with the wavelength $\lambda$ and the first intensity $I_1$ and the exciting illumination with the exciting wavelength $\lambda_e$ and the exciting intensity $I_e$;

- setting the system (1) so that when using the fluorescent species, the illumination system delivers at least:

- an exciting beam (4) having the exciting wavelength $\lambda_e$ and the exciting intensity $I_e$;
- an enhancing beam (6) having the enhancing wavelength $\lambda_+$ and the maximum enhancing intensity $I_{max}(\lambda_+)$ reachable for the enhancing wavelength $\lambda_+$.

14. Method according to claim 13 further comprising choosing an optimum enhancing intensity $I_+$ as the smallest value of the enhancing intensity $I_+$ respecting $R'(2I) \leq \alpha R'(I)$ where :

- a is inferior or equal to 2, preferably inferior or equal to 1.5 and more preferably equal to 1.1.
- $R'(I) = (Q'_{1+2}(I)-Q_2(I))/Q_1$ where :

- $Q'_2(I)$ is the quantity of fluorescence light emitted by the fluorescent species during the illumination period $P_i$ when illuminated by the sole enhancing illumination with the enhancing wavelength $\lambda_+$ and with an intensity I superior to the exciting intensity $I_e$ and lower than $I_{max}(\lambda_+)$,
- $Q'_{1+2}(I)$ is the quantity of fluorescence light emitted by the fluorescent species during the illumination period $P_i$ when illuminated by both the enhancing illumination with enhancing wavelength $\lambda_+$ and intensity I and the exciting illumination with exciting wavelength $\lambda_e$ and exciting intensity $I_e$;

- setting the system (1) so that the illumination system (3, 5) delivers at least:

- an exciting beam (4) having the exciting

wavelength $\lambda_e$ and the exciting intensity $I_e$;
- an enhancing beam (6) having the optimum enhancing wavelength $\lambda_+$ and the optimum enhancing intensity $I_+$.

15. Method according to claim 13 or 14 wherein the first intensity $I_1$ fulfills the relation $I_e \leq I_1 \leq 5I_e$.and preferably equals $3I_e$.

16. Fluorescence microscopy system suitable for implementing the method according to any of the preceding claims, the system (1) comprising an illumination system (3, 5) able to deliver in a same region at least:

- an exciting beam (4) having the exciting wavelength $\lambda_e$ and the exciting intensity $I_e$;
- an enhancing beam (6) having the enhancing wavelength $\lambda_+$ and the enhancing intensity $I_+$.

17. Fluorescence microscopy system according to the preceding claim, wherein the illumination system (3, 5) comprises at least two light sources (3, 5), one being a tunable light source (5) able to deliver an enhancing illumination with an enhancing wavelength $\lambda_+$ tunable between at least 700 nm and 1000 nm and an enhancing intensity $I_+$ tunable between at least 20 W.cm$^{-2}$ and 10 kW.cm$^{-2}$.

# Fig.1

# Fig.2

## Fig.3

## Fig.4

Fig.5

Fig.6

# Fig.7

# Fig.8

# Fig.9

# Fig.10

Europäisches
Patentamt

European
Patent Office

Office européen
des brevets

# EUROPEAN SEARCH REPORT

Application Number

EP 21 30 5834

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RICHARDS CHRIS I. ET AL: "Synchronously Amplified Fluorescence Image Recovery (SAFIRe)", JOURNAL OF PHYSICAL CHEMISTRY PART B, vol. 114, no. 1, 14 January 2010 (2010-01-14), pages 660-665, XP055866486, US ISSN: 1520-6106, DOI: 10.1021/jp909167j Retrieved from the Internet: URL:https://pubs.acs.org/doi/pdf/10.1021/jp909167j> * abstract * * page 661, right-hand column, last paragraph - page 662, left-hand column * * figures 1,2 * | 1-3,6,8, 10-17 | INV. G01N21/64 |
| X | Giske Arnold: "CryoSTED microscopy A new spectroscopic approach for improving the resolution of STED microscopy using low temperature", , 1 January 2007 (2007-01-01), XP55866414, Retrieved from the Internet: URL:http://archiv.ub.uni-heidelberg.de/volltextserver/7969/1/CryoSTED_microscopy_PhD Thesis_agiske.pdf [retrieved on 2021-11-26] * figures 2.3,3.6,3.7 * * page 15, last paragraph * * page 32, paragraph 1 * * page 35, paragraph 1 * * page 38, paragraphs 1,2 * | 1-5,7,9, 10,12-16 | |
| | | | TECHNICAL FIELDS SEARCHED (IPC) |
| | | | G01N G02B |

-/--

The present search report has been drawn up for all claims

| Place of search | Date of completion of the search | Examiner |
|---|---|---|
| Munich | 29 November 2021 | D'Alessandro, Davide |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 3

Europäisches
Patentamt

European
Patent Office

Office européen
des brevets

**EUROPEAN SEARCH REPORT**

Application Number

EP 21 30 5834

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHRIS I. RICHARDS ET AL: "Optically Modulated Fluorophores for Selective Fluorescence Signal Recovery", JOURNAL OF THE AMERICAN CHEMICAL SOCIETY, vol. 131, no. 13, 8 April 2009 (2009-04-08), pages 4619-4621, XP055366310, ISSN: 0002-7863, DOI: 10.1021/ja809785s * figure 1 * * page 4620, left-hand column, last paragraph * | 1,2,8, 10,13-17 | |
| X | RINGEMANN C ET AL: "Enhancing fluorescence brightness: effect of reverse intersystem crossing studied by fluorescence fluctuation spectroscopy", CHEMPHYSCHEM, WILEY - V C H VERLAG GMBH & CO. KGAA, DE, vol. 9, 1 January 2008 (2008-01-01), pages 612-624, XP008108392, ISSN: 1439-4235, DOI: 10.1002/CPHC.200700596 * abstract * * figure 4 * * page 632 * | 1,10,16 | |

TECHNICAL FIELDS SEARCHED (IPC)

-/--

The present search report has been drawn up for all claims

| Place of search | Date of completion of the search | Examiner |
|---|---|---|
| Munich | 29 November 2021 | D'Alessandro, Davide |

Europäisches
Patentamt

European
Patent Office

Office européen
des brevets

**EUROPEAN SEARCH REPORT**

Application Number

EP 21 30 5834

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MONDAL PARTHA: "Minimizing photobleaching in fluorescence microscopy by depleting triplet states", APPLIED PHYSICS LETTERS, AMERICAN INSTITUTE OF PHYSICS, 2 HUNTINGTON QUADRANGLE, MELVILLE, NY 11747, vol. 92, no. 1, 7 January 2008 (2008-01-07), pages 13902-13902, XP012105770, ISSN: 0003-6951, DOI: 10.1063/1.2830996 * abstract * * figure 1 * * page 2, right-hand column, last paragraph * ----- | 1,11,16 | |

TECHNICAL FIELDS
SEARCHED     (IPC)

The present search report has been drawn up for all claims

| Place of search | Date of completion of the search | Examiner |
|---|---|---|
| Munich | 29 November 2021 | D'Alessandro, Davide |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HARADA et al.** Mechanochemical coupling in acto-myosin energy transduction studied by in vitro movement assay. *J. Mol. Biol.,* 1990, vol. 216, 49
- **THURSTON et al.** Oxyrase cell membrane preparations simplify cultivation of anaerobic bacteria. *Lab. Med.,* 2000, vol. 31, 509
- **RASNIK et al.** Nonblinking and long-lasting single-molecule fluorescence imaging. *Nat. Methods,* 2006, vol. 3, 891
- **VOGELSANG et al.** A reducing and oxidizing system minimizes photobleaching and blinking of fluorescent dyes. *Angew. Chem. Int. Ed.,* 2008, vol. 47, 5465
- **BOGDANOV et al.** Cell culture medium affects GFP photostability: a solution. *Nat. Methods,* 2009, vol. 6, 859
- **BOGDANOV et al.** Anti-fading media for live cell GFP imaging. *Plos One,* 2012, vol. 7, e53004
- **MAMONTOVA et al.** Influence of cell growth conditions and medium composition on EGFP photostability in live cells. *BioTechniques,* 2015, vol. 58, 258